# EUROPÄISCHE PATENTSCHRIFT

(11) **EP 2 481 939 B1**
(45) Veröffentlichungstag und Bekanntmachung des Hinweises auf die Patenterteilung: **01.07.2015**
(21) Anmeldenummer: 11008901.8
(22) Anmeldetag: 09.11.2011
(51) Int. Cl.: F16B 37/04, F16L 33/04

(54) **Spannschelle**
clamping collar
collier de serrage

(30) Priorität: 27.01.2011 DE 102011009536
(43) Veröffentlichungstag der Anmeldung: 01.08.2012
(73) Patentinhaber: NORMA Germany GmbH, 63477 Maintal (DE)
(72) Erfinder: Krüger, Manfred, 63654 Büdingen (DE)
(74) Vertreter: Patentanwälte Olbricht Buchhold Keulertz

(56) Entgegenhaltungen:
- EP-A1- 0 601 899
- EP-A1- 2 177 775
- BE-A- 499 584
- DE-C1- 10 122 647
- DE-U- 1 901 917
- US-A- 2 002 141
- US-A- 2 571 747
- US-A- 2 627 294
- US-A- 2 695 046

## Beschreibung

Die Erfindung betrifft eine Spannschelle, mit einer Spannschraube, die mit einer mehreckigen Gewindemutter zusammenwirkt.

Derartige Spannelemente dienen beispielsweise dazu, Rohre oder Leitungen auf Anschlussstutzen durch das Einbringen radialer Spannkräfte zu halten. Dabei werden die Spannelemente durch Anziehen der Spannschraube zusammengezogen, wobei die Spannschraube in die Gewindemutter hineingeschraubt wird.

Bei Spannschellen, wie beispielsweise Profilschellen, werden die Gewindemutter und die Spannschraube an jeweils einem Spannkopf der Schelle gelagert. Da sich beim Anziehen der Spannschraube der Radius der Spannschelle verringert, verändert sich die Winkellage zwischen Gewindemutter und- Spannschraube. Dadurch steigen die erforderlichen Betätigungskräfte an.

Es ist nun bekannt, die Gewindemutter und/oder die Spannschraube schwenkbar zu lagern. Eine derartige Lagerung ist jedoch relativ aufwendig und damit kostenintensiv.

In US 2 002 141 A wird eine Spannschelle mit einer Spannschraube und einer Gewindemutter offenbart. Die Schraube wird dabei durch einen gebogenen Abschnitt des Schellenbandes geführt. Die Schraube greift dann durch Öffnungen von mit dem Schellenband verbundenen Teilen. Die Gewindemutter ist dabei an der der Spannschraube abgewandten Seite des Teils angeordnet. D1 offenbart dabei weder, dass die Gewindemutter verdrehsicher in einem Federbügel gehalten ist, noch dass ein Federbügel mit dem Spannelement verrastet wäre. Dementsprechend werden auch keinerlei Schenkel eines Federbügels gezeigt, oder dass Enden solcher Schenkel mit einem Gewinde der Spannschraube in Eingriff bringbar wären.

DE 19 01 917 U betrifft eine Spannschelle für Schläuche und Rohre und offenbart den Oberbegriff von Anspruch 1. Die Spannschelle weist dabei Spannkörper in Kastenform auf. Durch Öffnungen in den Spannkörpern ist dabei eine Spannschraube geführt, die in eine Gewindemutter eingreift.

EP 2 177 775 A1 offenbart eine Anlage zum Zusammenbau von zwei Teilen. Die Anlage umfasst dabei eine Spannschraube, sowie eine Gewindemutter. Die Gewindemutter wird dabei verdrehsicher zwischen zwei Schenkeln eines Federbügels gehalten.

US 2 695 046 A offenbart eine Gewindemutter und eine Spannschraube. Die Gewindemutter wird dabei in einem Federbügel verdrehsicher gehalten. Der Federbügel umfasst dabei zwei Schenkel.

Auch in BE 499 584 A wird eine Gewindemutter offenbart, die in einem Federbügel gehalten ist. Die Gewindemutter kann dabei mit einer Spannschraube in Eingriff gebracht werden. Der Federbügel umfasst dabei Schenkel.

DE 101 22 647 C1 offenbart eine Rohrschelle, umfassend ein Schellenband und zwei Spannbacken. Die Spannbacken können dabei mit einer Spannschraube und einer Gewindemutter aufeinander zu bewegt werden, um die Rohrschelle zu spannen. Die Gewindemutter wird dabei durch radial vorstehende Laschen verdrehsicher gehalten.

US 2 571 747 A zeigt ein Befestigungsbauteil zur Aufnahme und Befestigung eines Schraubbolzens. Das Befestigungsbauteil wird zunächst in eine Öffnung eines Trägers eingeführt, bis Vorsprünge an einer Stirnseite des Trägers anliegen. Gleichzeitig verrasten Zungen an der den Vorsprüngen gegenüberliegenden Stirnseite des Trägers.

Aus US 2 627 294 A ist eine Käfigmutter bekannt. Die Käfigmutter umfasst eine Halterung, mit der eine Mutter an einer Öffnung eines Trägers vorbefestigt werden kann. Die Halterung umfasst hierfür U-förmig gebogene Vorsprünge, die den Träger formschlüssig im Bereich der Öffnung von beiden Stirnseiten umgreifen.

Der Erfindung liegt nun die Aufgabe zugrunde, die Lagerung der Gewindemutter am Spannelement einfach zu gestalten.

Efindungsgemäß wird diese Aufgabe durch eine Spannschelle nach den Kennzeichen von Anspruch 1 gelöst.

Die Herstellung eines Federbügels kann relativ einfach durch Umformen eines entsprechenden Materialstreifens, beispielsweise aus Metall oder ähnlichem, erfolgen. Dabei kann durch die Verwendung des Federbügels eine relativ spielfreie Lagerung erhalten werden, die gleichzeitig beim Einwirken von äußeren Kräften etwas nachgiebig ist, so dass ohne Probleme ein Winkelausgleich zwischen Gewindemutter und Spannschraube erfolgen kann. Dabei kann der Federbügel aus einem anderen Material hergestellt sein als das Spannelement und die Gewindemutter. Die Rastverbindung zwischen Federbügel und Spannelement lässt nahezu beliebige Materialkombinationen zu.

Erfindungsgemäß ist der Federbügel im Wesentlichen U-förmig ausgebildet und weist einen Boden und zwei Schenkel auf. Eine derartige Ausbildung des Federbügels ist relativ einfach herstellbar. Durch die beiden Schenkel erfolgt dabei eine Verdrehsicherung der Gewindemutter, die mit einer Stirnseite am Boden anliegen kann. Gleichzeitig wird der Federbügel über die Schenkel am Spannelement gehalten. Dabei können die Schenkel beispielsweise eine federnde Haltekraft erzeugen.

Erfindungsgemäß weisen die Schenkel jeweils eine nach innen gerichtete erste Stufe auf, wobei die Gewindemutter zwischen Boden und der ersten Stufe gehalten ist. Die Gewindemutter ist also formschlüssig im Federbügel gehalten. Die beim Einschrauben der Schraube in die Gewindemutter auftretenden Kräfte werden vom Federbügel aufgenommen. Dabei kann erfindungsgemäß ein leichtes Verschwenken zwischen dem Federbügel und dem Spannelement möglich sein. Dies dient zur Erleichterung beim Einfädeln der Gewindeschraube während der Montage.

Vorzugsweise gehen vom Boden mindestens zwei Haltelaschen an jeweils einer Seite aus, die die Gewindemutter seitlich halten. Die Gewindemutter kann dann auch in einer Richtung, die quer zur Einschraubrichtung verläuft, nicht vom Federhalter getrennt werden. Vielmehr ist die Gewindemutter sozusagen in den Federbügel eingeformt oder eingekammert und unverlierbar gehalten. Dabei können die Haltelaschen zusätzlich zu den Schenkeln ein möglicherweise auftretendes Drehmoment aufnehmen. Sie dienen also ebenfalls als Verdrehsicherung der Gewindemutter. Dadurch können höhere Drehmomente aufgenommen werden.

Vorteilhafterweise weisen die Schenkel jeweils eine nach außen gerichtete zweite Stufe auf, wobei zwischen der ersten Stufe und der zweiten Stufe an einer Außenseite der Schenkel eine Rastnut ausgebildet ist. Diese Rastnut wirkt mit einem entsprechend ausgebildeten Rand einer Öffnung des Spannelements zusammen, so dass der Federbügel und damit die Gewindemutter verliersicher am Spannelement gehalten ist. Dabei kann die Rastnut eine derartige Erstreckung aufweisen, dass ein Schwenkverhalten des Federbügels mit der Gewindemutter zugelassen wird. Der Federbügel ist dann schwenkbar mit dem Spannelement verrastet.

Dabei ist besonders bevorzugt, dass an einer Innenseite der Schenkel im Bereich der Rastnut mindestens ein Gewindegang eingeformt ist. Dieser Gewindegang kann relativ einfach ausgebildet sein, beispielsweise als umgeformtes Blech. Ein derartiger Gewindegang dient zum Vormontieren der Spannschraube. Dadurch wird das Einführen der Spannschraube in die Gewindemutter vereinfacht. Bereits vor Montage des Spannelements kann die Spannschraube dann in den Gewindegang im Bereich der Rastnut eingeführt werden und ist damit verliersicher gehalten.

In einer anderen bevorzugten Ausführungsform sind freie Enden der Schenkel aufeinander zu gebogen, wobei gegebenenfalls die Enden mit einem Gewinde der Spannschraube in Eingriff bringbar sind. Die freien Enden können dafür entsprechend ausgebildet sein, also beispielsweise abgeflacht sein und/oder mit einer Rundung versehen sein. Durch die eingebogenen freien Enden der Schenkel kann eine Führung der Spannschraube erfolgen, so dass diese leichter in die Gewindemutter eingeführt werden kann. Wenn nun die Enden mit einem Gewinde der Spannschraube in Eingriff bringbar sind, kann eine verliersichere Vorpositionierung der Spannschraube erfolgen. Dabei sind keine zusätzlichen Bauteile erforderlich. Vielmehr erfolgt die Vorpositionierung mit sehr einfachen, bereits vorhandenen Mitteln.

Vorzugsweise sind an den Schenkeln Sicherungslaschen vorgesehen, die insbesondere einstückig mit den Schenkeln ausgebildet sind. Die Sicherungslaschen dienen zum Verrasten des Federbügels mit dem Spannelement und verhindern so ein unbeabsichtigtes Herausfallen des Federbügels. Bei einer einstückigen Ausführung lassen sich die Sicherungslaschen durch einfaches Ausstanzen und Umbiegen erzeugen. Der Herstellungsaufwand bleibt also gering. Dabei kann durch die Wahl einer entsprechenden Wandstärke des Federbügels eine ausreichende Elastizität der Sicherungslaschen gewährleistet werden, so dass eine problemlose Montage gewährleistet ist.

Vorzugsweise sind zwischen Haltelaschen und Schenkeln offene Kanten ausgebildet. Derartig offene Kanten erleichtern zum einen den Umformvorgang zur Herstellung des Federbügels, zum anderen ermöglichen sie die Herstellung mit relativ großen Toleranzen, da Kanten der Gewindemutter einfach im Bereich der offenen Kanten des Federbügels positioniert werden, wodurch unnötiger Zwang vermieden wird.

Die Erfindung wird im Folgenden anhand bevorzugter Ausführungsbeispiele in Verbindung mit der Zeichnung beschrieben. Hierin zeigen:
- Fig. 1: ein Spannelement,
- Fig. 2.: einen Federbügel einer ersten Ausführungsform in dreidimensionaler Ansicht,
- Fig. 3: den Federbügel gemäß Fig. 2 in Schnittansicht,
- Fig. 4: den Federbügel aus Fig. 2 und 3 aus einer anderen Blickrichtung,
- Fig. 5: einen Federbügel einer zweiten Ausführungsform in dreidimensionaler Darstellung,
- Fig. 6: den Federbügel nach Fig. 5 in geschnittener Darstellung und
- Fig. 7: den Federbügel nach den Fig. 5 und 6 aus einer anderen Blickrichtung.

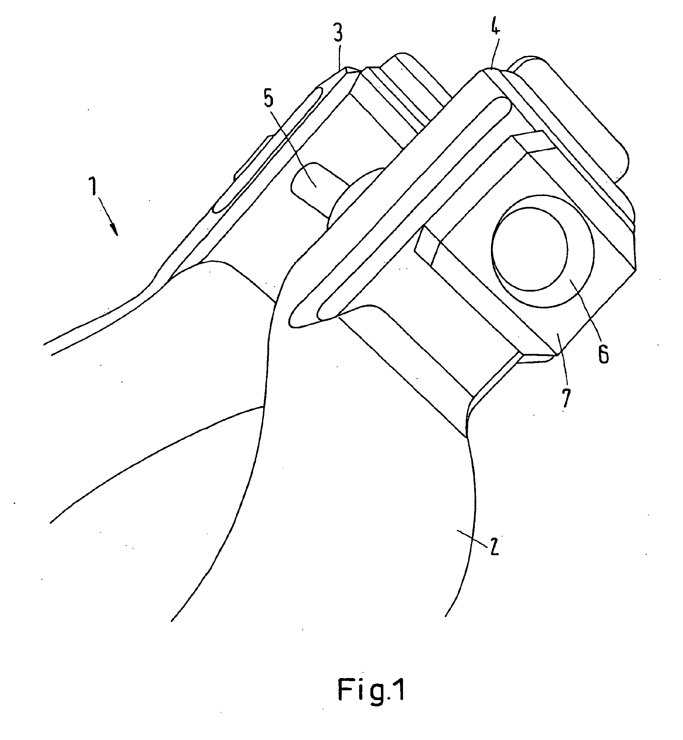

In Fig. 1 ist ein Spannelement 1 gezeigt, das als Profilschelle, also allgemein als Spannschelle, ausgebildet ist. Das Spannelement 1 weist ein Schellenband 2 auf, das an seinen Enden mit Spannköpfen 3, 4 versehen ist. Zum Spannen der Profilschelle ist eine Spannschraube 5 vorgesehen, die mit einer Gewindemutter 6 zusammenwirkt. Die Gewindemutter 6 ist verdrehsicher in einem Federbügel 7 gehalten, der am Spannkopf 4 mit dem Spannelement 1 verrastet ist.

Bei diesem Beispiel ist die Gewindemutter 6 als Vierkantmutter ausgebildet. Es ist aber auch denkbar, beispielsweise eine Sechskantmutter zu verwenden.

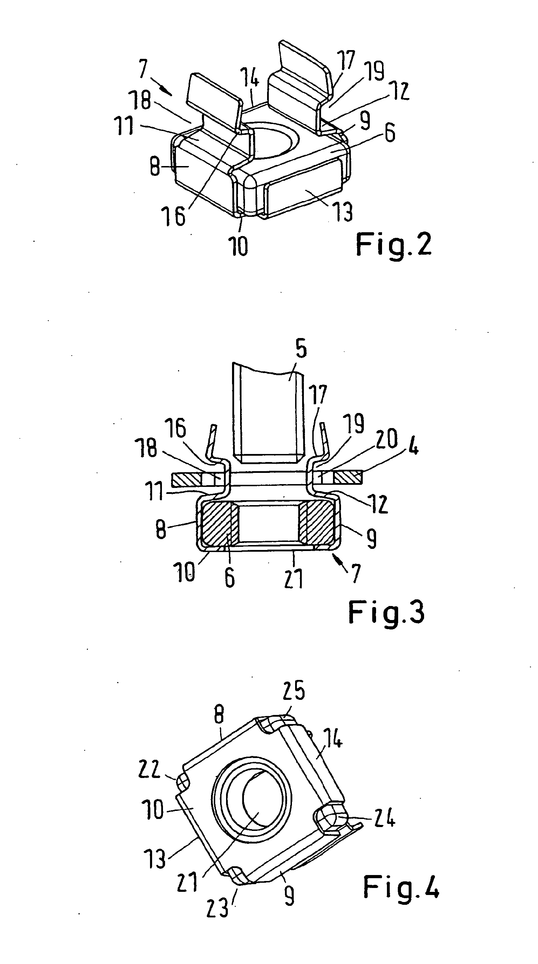

Die Ausgestaltung des Federbügels 7 gemäß einer ersten Ausführungsform ist in Fig. 2 dargestellt. Der Federbügel 7 ist im Wesentlichen U-förmig mit zwei Schenkeln 8, 9 und einem Boden 10 ausgebildet. An einer Innenseite des Bodens 10 liegt die Gewindemutter 6 an, die wieder als Vierkantmutter ausgebildet ist. Die Schenkel 8, 9 weisen eine nach innen gerichtete erste Stufe 11, 12 auf, wobei die Gewindemutter 6 zwischen der jeweils ersten Stufe 11, 12 und dem Boden 10 gehalten ist. Die Schenkel 8, 9 liegen gleichzeitig seitlich an der Gewindemutter 6 an, so dass bereits dadurch eine Verdrehsicherung erfolgt.

Zusätzlich sind Haltelaschen 13, 14 vorgesehen, die vom Boden 10 ausgehen und senkrecht nach oben umgebogen sind, so dass dadurch eine weitere Verdrehsicherung der Gewindemutter 6 erfolgt. Gleichzeitig ist die Gewindemutter damit in einer Ebene senkrecht zu einer Einschraubrichtung der Spannschraube 5 formschlüssig gehalten. Die Gewindemutter 6 ist also unverlierbar im Federbügel 7 gehalten.

Die Schenkel 8, 9 weisen jeweils eine zweite Stufe 16, 17 auf, die nach außen gerichtet ist. Dabei ist jeweils zwischen der ersten Stufe 11, 12 und der zweiten Stufe 16, 17 eine Rastnut 18, 19 ausgebildet.

Wie aus Fig. 3 zu erkennen ist, ist der Federbügel 7 in einer entsprechenden Öffnung 20 im Spannkopf 4 eingeführt und dort derartig verrastet, dass Ränder der Öffnung 20 im Bereich der Rastnuten 18, 19 positioniert sind. Dabei ist ein Abstand zwischen der ersten Stufe 11, 12 und der zweiten Stufe 16, 17 größer als eine Materialstärke des Spannkopfs 4, so dass ein Verschwenken des Federbügels 7 in einem gewünschten Bereich möglich ist. Dadurch ist es möglich, die Gewindemutter 6 bezüglich der Spannschraube 5 winkelmäßig auszurichten.

Der Boden 10 des Federbügels 7 ist mit einer zentralen Öffnung 21 versehen, durch die die Spannschraube 5 hindurchgeführt werden kann. Der Verstellweg der Spannschraube wird durch den Federbügel 7 also nicht beschränkt.

Im Bereich der Rastnuten 18, 19 können die Schenkel 8, 9 an ihrer Innenseite jeweils mindestens einen Gewindegang aufweisen, der mit der Spannschraube 5 zusammenwirkt. Dadurch ist eine Vormontage der Spannschraube 5 möglich. Es ist auch denkbar, die Innenseite der Schenkel 8, 9 glatt auszubilden, wobei dann durch die Innenseite eine Gleitführung der Spannschraube 5 erfolgen kann, so dass ein Einführen der Spannschraube 5 in die Gewindemutter 6 relativ einfach möglich ist.

In Fig. 4 ist der Federbügel 7 mit der Gewindemutter 6 wieder in räumlicher Darstellung gezeigt, aber aus einer anderen Perspektive als in Fig. 2. Es ist zu erkennen, dass Kanten 22, 23, 24, 25 des Federbügels 7 als offene Kanten ausgebildet sind, durch die Ecken bzw. Kanten der Gewindemutter 6 herausragen. Dadurch kann der Federbügel 7 mit relativ hohen Toleranzen gefertigt werden, was eine einfache Herstellung mittels Biegeprozess ermöglicht.

Die Schenkel 8, 9 und die Haltelaschen 13, 14 sind dabei einstückig mit dem Boden 10 ausgebildet.

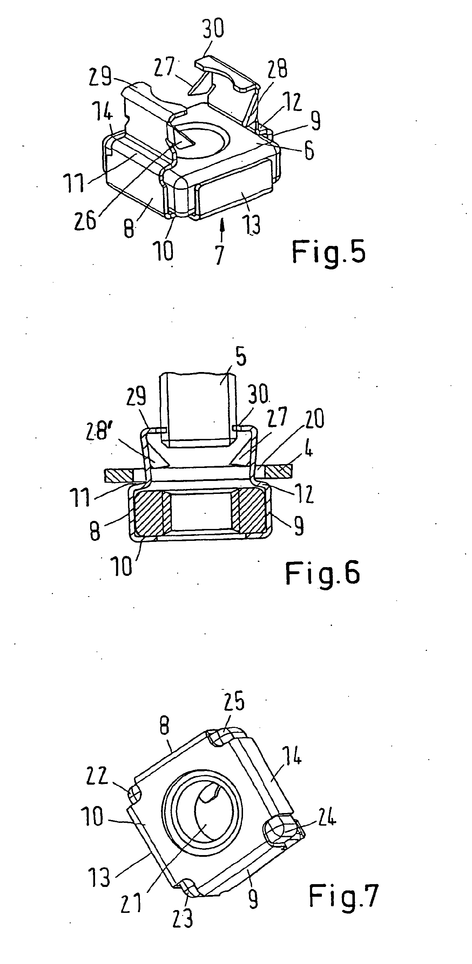

Fig. 5 zeigt einen Federbügel 7 einer zweiten Ausführungsform, wobei gleiche Teile mit entsprechenden Bezugszeichen versehen sind. Wie auch der Federbügel 7 gemäß der Ausgestaltung der Fig. 2 bis 4 weist der Federbügel 7 in Fig. 5 zwei Schenkel 8, 9 auf, die von einem Boden 10 ausgehen, so dass der Federbügel 7 im Wesentlichen U-förmig ausgebildet ist. Zusätzlich sind Haltelaschen 13, 14 vorgesehen. Die Schenkel 8, 9 weisen eine nach innen gerichtete erste Stufe 11, 12 auf, wobei die Gewindemutter 6 zwischen der ersten Stufe 11, 12 und dem Boden 10 sowie zwischen den Schenkeln 8, 9 und den Haltelaschen 13, 14 formschlüssig und verliersicher gehalten ist.

Die Schenkel 8, 9 sind mit nach innen gerichteten Sicherungslaschen 26, 27, 28, 28' versehen, die zum Verrasten des Federbügels 7 im Spannelement 1 bzw. in einem Spannkopf 4 dienen. Freie Enden 29, 30 der Schenkel 8, 9 sind aufeinander zu gebogen und derart ausgebildet, dass sie mit einem Gewinde der Spannschraube in Eingriff bringbar sind. Dadurch kann ein relativ einfaches Vorpositionieren der Spannschraube erfolgen.

Dies ist in Fig. 6 dargestellt.

Fig. 7 zeigt nun den Federbügel 7 gemäß der Fig. 6 und 5 wieder in räumlicher Darstellung, aber aus einer anderen Perspektive. Auch der Federbügel 7 dieser Ausgestaltung weist offene Kanten 22, 23, 24, 25 auf.

Die bei der Ausführungsform gemäß der Fig. 5 bis 7 gezeigten Sicherungslaschen können auch bei der Ausführungsform gemäß der Fig. 2 bis 4 eingesetzt werden.

Bei einer Ausbildung der Gewindemutter 6 beispielsweise als Sechskantmutter können entsprechend weitere Haltelaschen vorgesehen sein, wobei Kanten zwischen den Haltelaschen entsprechenderweise offen ausgebildet sein können.

Durch die erfindungsgemäße Ausgestaltung des Spannelements mit dem Federbügel 7 können handelsübliche Gewindemuttern, wie Vierkant- oder Sechskantmuttern, verwendet werden. Diese Gewindemuttern werden im Federbügel verdrehsicher eingekammert, also formschlüssig und verliersicher gehalten. Durch die Ausgestaltung der Federbügel mit den Schenkeln kann der Federbügel beispielsweise im Spannkopf einer Profilschelle oder einer anderen Spannschelle eingeklipst werden. Dabei kann sogar ein entsprechendes Schwenkverhalten des Federbügels erreicht werden, so dass eine relativ einfache Montage, insbesondere ein einfaches Einführen der Spannschraube in die Gewindemutter, möglich ist. Auch ist es ohne großen Aufwand möglich, eine Führung der Spannschraube bereitzustellen, bevor diese mit der Gewindemutter in Eingriff gebracht wird. Dabei kann bereits ein Voreinrasten der Spannschraube erfolgen. Dadurch ist eine einfache Vormontage möglich. Da zwischen Federbügel und Spannelement nur eine Rastverbindung erfolgt, können vielfältige Materialien miteinander kombiniert werden. Es ist insbesondere nicht erforderlich, den Federbügel aus dem gleichen Material herzustellen wie das Spannelement.

Insgesamt wird eine relativ einfache Lagerung der Gewindemutter am Spannelement ermöglicht, die gleichzeitig eine gewisse Verschwenkbarkeit zulässt, so dass ein einfaches Einfädeln der Spannschraube gewährleistet ist.

## Patentansprüche

1. Spannschelle mit einer Spannschraube, die mit einer mehreckigen Gewindemutter zusammenwirkt, wobei die Gewindemutter (6) verdrehsicher in einem Federbügel (7) gehalten ist, der mit der Spannschelle (1) verrastet ist, und wobei der Federbügel (7) im Wesentlichen U-förmig ausgebildet ist und einen Boden (10) und zwei Schenkel (8, 9) aufweist, **dadurch gekennzeichnet, dass** die Schenkel (8, 9) jeweils eine nach innen gerichtete erste Stufe (11, 12) aufweisen, wobei die Gewindemutter (6) zwischen Boden (10) und der ersten Stufe (11, 12) gehalten ist, und wobei ein Verschwenken zwischen dem Federbügel (7) und der Spannschelle (1) möglich ist.

2. Spannschelle nach Anspruch 1, **dadurch gekennzeichnet, dass** vom Boden (10) mindestens zwei Haltelaschen (14, 15) an jeweils einer Seite ausgehen, die die Gewindemutter (6) seitlich halten.

3. Spannschelle nach Anspruch 1 oder 2, **dadurch gekennzeichnet, dass** die Schenkel (8, 9) jeweils eine nach außen gerichtete zweite Stufe (16, 17) aufweisen, wobei zwischen der ersten Stufe (11, 12) und der zweiten Stufe (16, 17) an einer Außenseite der Schenkel (8, 9) eine Rastnut (18, 19) ausgebildet ist.

4. Spannschelle nach Anspruch 3, **dadurch gekennzeichnet, dass** an einer Innenseite der Schenkel (8, 9) im Bereich der Rastnuten (18, 19) mindestens ein Gewindegang eingeformt ist.

5. Spannschelle nach Ansprüche 1 bis 2, **dadurch gekennzeichnet, dass** freie Enden (29, 30) der Schenkel (8, 9) aufeinander zu gebogen sind, wobei die freien Enden (29, 30) mit einem Gewinde der Spannschraube (5) in Eingriff bringbar sind.

6. Spannschelle nach einem der Ansprüche 2 bis 5, **dadurch gekennzeichnet, dass** an den Schenkeln (8, 9) Sicherungslaschen (26, 27, 28, 28') vorgesehen sind, die insbesondere einstückig mit den Schenkeln (8, 9) ausgebildet sind.

7. Spannschelle nach einem der Ansprüche 2 bis 6, **dadurch gekennzeichnet, dass** zwischen Haltelaschen (14, 15) und den Schenkeln (8, 9) offene Kanten (22, 23, 24, 25) ausgebildet sind.

## Claims

1. Clamping collar comprising a tightening screw which interacts with a polygonal threaded nut, the threaded nut (6) being held against rotation in a spring clip (7) which is locked to the clamping collar (1), and the spring clip (7) being substantially U-shaped and comprising a base (10) and two legs (8, 9), **characterised in that** each of the legs (8, 9) has an inwardly directed first step (11, 12), the threaded nut (6) being held between the base (10) and the first step (11, 12), and a pivoting action between the spring clip (7) and the clamping collar (1) being possible.

2. Clamping collar according to claim 1, **characterised in that** at least two holding tabs (14, 15) extend from the base (10) on one side thereof respectively and hold the threaded nut (6) laterally.

3. Clamping collar according to either claim 1 or claim 2, **characterised in that** each of the legs (8, 9) has an outwardly directed second step (16, 17), a locking groove (18, 19) being formed between the first step (11, 12) and the second step (16, 17) on an outer face of the legs (8, 9),

4. Clamping collar according to claim 3, **characterised in that** at least one thread is moulded on an inner face of the legs (8, 9) in the region of the locking grooves (18, 19).

5. Clamping collar according to claims 1 and 2, **characterised in that** free ends (29, 30) of the legs (8, 9) are bent towards each other, it being possible to bring the free ends (29, 30) into engagement with a thread of the tightening screw (5).

6. Clamping collar according to any of claims 2 to 5, **characterised in that** securing tabs (26, 27, 28, 28') are provided on the legs (8, 9), which tabs are in particular integral with the legs (8, 9).

7. Clamping collar according to any of claims 2 to 6, **characterised in that** open corners (22, 23, 24, 25) are formed between holding tabs (14, 15) and the legs (8, 9).

## Revendications

1. Collier de serrage comprenant une vis de serrage qui coopère avec un écrou taraudé polygonal, dans lequel l'écrou taraudé (6) est maintenu de manière à ne pas pouvoir tourner dans un étrier à ressort (7), qui est imbriqué dans le collier de serrage (1), et dans lequel l'étrier à ressort (7) est conformé sensiblement en U et présente un fond (10) et deux ailes (8, 9), **caractérisé en ce que** les ailes (8, 9) présentent respectivement un premier gradin (11, 12) tourné vers l'intérieur, dans lequel l'écrou taraudé (6) est maintenu entre le fond (10) et le premier gradin (11, 12) et dans lequel un basculement entre l'étrier à ressort (7) et le collier de serrage (1) est possible.

2. Collier de serrage selon la revendication 1, **caractérisé en ce que** font saillie du fond (10) sur respectivement un côté au moins deux éclisses de maintien (14, 15) qui retiennent latéralement l'écrou taraudé (6).

3. Collier de serrage selon la revendication 1 ou la revendication 2, **caractérisé en ce que** les ailes (8, 9) présentent respectivement un second gradin (16, 17) tourné vers l'extérieur, dans lequel une rainure d'arrêt (18, 19) est formée entre le premier gradin (11, 12) et le second gradin (16, 17) sur un côté externe des ailes (8, 9).

4. Collier de serrage selon la revendication 3, **caractérisé en ce qu'**au moins un pas de vis est formé sur un côté interne des ailes (8, 9) dans la zone des rainures d'arrêt (18, 19).

5. Collier de serrage selon les revendications 1 et 2, **caractérisé en ce que** des extrémités libres (29, 30) des ailes (8, 9) doivent être repliées l'une sur l'autre, dans lequel les extrémités libres (29, 30) peuvent être amenées en prise avec un filet de la vis de serrage (5).

6. Collier de serrage selon l'une quelconque des revendications 2 à 5, **caractérisé en ce qu'**il est prévu sur les ailes (8, 9) des éclisses de sécurité (26, 27, 28, 28') qui sont conformées en particulier d'un seul tenant avec les ailes (8, 9) .

7. Collier de serrage selon l'une quelconque des revendications 2 à 6, caractérisé en ce des bords ouverts (22, 23, 24, 25) sont formés entre les éclisses de maintien (14, 15) et les ailes (8, 9).
